# EUROPÄISCHE PATENTSCHRIFT

(11) **EP 3 611 088 B1**
(45) Veröffentlichungstag und Bekanntmachung des Hinweises auf die Patenterteilung: **22.12.2021**
(21) Anmeldenummer: 19000246.9
(22) Anmeldetag: 20.05.2019
(51) Int. Cl.: B62M 3/00, B62J 45/421, G01L 3/10, G01P 3/44

(54) **TRETLAGER UND FAHRRAD MIT EINEM SOLCHEN TRETLAGER**
CRANK AND BICYCLE COMPRISING SAME
PÉDALIER ET BICYCLE DOTÉE D'UN TEL PÉDALIER

(30) Priorität: 06.07.2018 DE 102018116428
(43) Veröffentlichungstag der Anmeldung: 19.02.2020
(73) Patentinhaber: Schaeffler Technologies AG & Co. KG, 91074 Herzogenaurach (DE)
(72) Erfinder: Escher, Maximilian, 97424 Schweinfurt (DE); Grehn, Alexander, 97421 Schweinfurt (DE); Schneider, Thomas, 97537 Wipfeld (DE); Benkert, Frank, 97534 Waigolshausen (DE); Hehn, Werner, 91056 Erlangen (DE); Schilling, Claus-Dieter, 97516 Oberschwarzach (DE)

(56) Entgegenhaltungen:
- WO-A1-2012/152540
- DE-A1- 19 609 981
- DE-A1- 19 613 079
- DE-A1-102008 029 088
- DE-A1-102013 202 383
- DE-U1-202008 018 111
- JP-A- 2014 004 851

## Beschreibung

Die Erfindung betrifft ein Tretlager mit einer Antriebswelle, welche zur Verbindung mit zwei Pedalen vorgesehen ist, zwei die Antriebswelle lagernden Wälzlagern, wobei die Wälzlager jeweils in einem Gehäuseteil angeordnet sind, einer axial zwischen den Wälzlagern angeordneten, die Antriebswelle umschließenden Messhülse, einer in axialer Verlängerung der Messhülse angeordneten, mit dieser drehfest verbundenen, zur Verbindung mit einem Kettenblattträger vorgesehenen Abtriebshülse, wobei die Messhülse und die Abtriebshülse einstückig ausgeführt sind, einem stirnseitig der Messhülse, auf deren der Abtriebshülse abgewandten Seite angeordneten Inkrementalgeber, welcher zur Drehzahl- und Drehsinnmessung der Antriebswelle vorgesehen ist, und einer die Messhülse koaxial umgebenden Auswerteeinheit, welche mit der Messhülse sowie mit dem Inkrementalgeber zusammenwirkt.

Tretlager der eingangs genannten Art sind aus der DE 10 2012 215 022 A1 bekannt. Die Figuren 1 und 2 zeigen den bekannten Stand der Technik auf. Ein insgesamt mit dem Bezugszeichen 1 gekennzeichnetes Tretlager weist eine Antriebswelle 2 auf, an welcher zwei nicht dargestellte Pedale befestigbar sind. Die Antriebswelle 2 ist in zwei Gehäuseteilen 3, 4 mittels zweier Wälzlager 5, 6 gelagert. Die beiden Gehäuseteile 3, 4 werden in einem Rahmenteil 7 eines Fahrrads nicht drehbar gelagert. Das durch den Fahrer der Fahrrads über die beiden Pedale in die Antriebswelle 2 eingeleitete Drehmoment wird an eine magnetisierte Messhülse 8 weitergeleitet, die die Antriebswelle 2 konzentrisch umgibt und einseitig, das heißt lediglich im Bereich einer ihrer Stirnseiten, drehfest mittels einer Verzahnung 9 mit der Antriebswelle 2 verbunden ist. Auf der zweiten, nicht mit der Antriebswelle 2 verbundenen Stirnseite der Messhülse 8 ist mit dieser eine Abtriebshülse 10 verbunden. Die Abtriebshülse 10, welche eine gerade Verlängerung der Messhülse 8 darstellt, ist drehfest verbunden mit einem Kettenblattträger 11, auf welchen in an sich bekannter Weise mindestens ein Kettenblatt des Fahrrads geschraubt wird. Auf der äußeren, den Wälzlagern 5, 6 abgewandten Seite des Kettenblattträgers 11 befindet sich eine Kontermutter 12, welche den festen Sitz des Kettenblattträgers 11 sichert.

Im Übergangsbereich zwischen der Messhülse 8 und der Abtriebshülse 10 ist diese Anordnung aus Messhülse 8 und Abtriebshülse 10 mittels einer Gleitlagerung 13 auf der Antriebswelle 2 gelagert. Die Gleitlagerung 13 braucht lediglich geringe, drehmomentabhängige Verdrehungen zwischen der Antriebswelle 2 und der Messhülse 8 oder Abtriebshülse 10 aufzunehmen, da die Messhülse 8 selbst bei einem hohen über die Antriebswelle 2 aufgebrachten Drehmoment lediglich eine geringe Torsion von nicht mehr als höchstens einigen Grad aufweist. Die Drehmomentbelastung innerhalb der Antriebswelle 2 sowie der Messhülse 8, welche kaum zu einer Torsion der Messhülse 8 führt, ist über geänderte magnetische Eigenschaften der Messhülse 8 detektierbar. Dieser zur Drehmomentmessung genutzte sogenannte magnetoelastische Effekt hat den Vorteil, dass sämtliche rotierenden, Drehmoment übertragenden Teile keine elektrischen Kontaktierungen zur Übertragung von Signalen oder elektrischer Leistung benötigen. Die Auswertesensensorik, mit welcher das in der Messhülse 8 wirkende Drehmoment detektiert wird, ist vielmehr in einer starr innerhalb des Rahmenteils 7 angeordneten Auswerteeinheit 14, auch als Bobin bezeichnet, angeordnet.

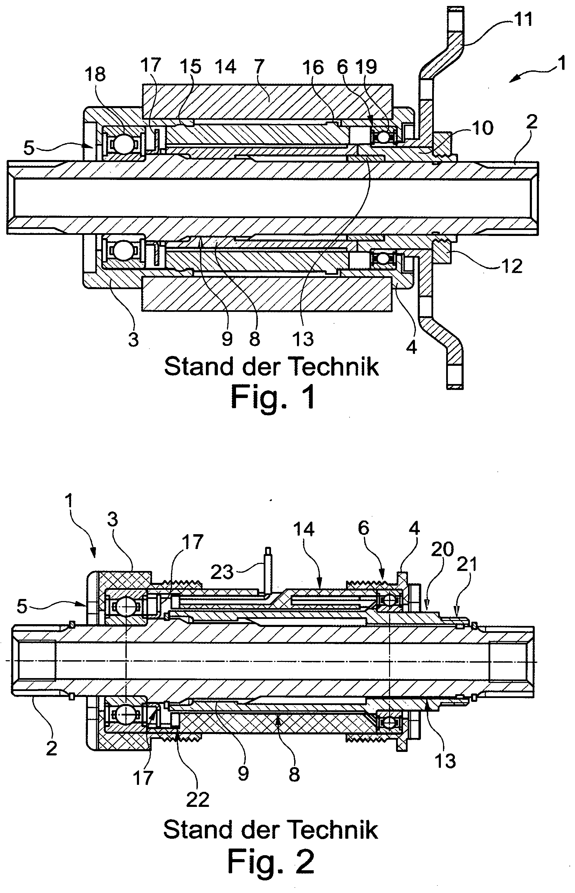

Die Auswerteeinheit 14 hat eine zur Antriebswelle 2 konzentrische hohlzylindrische Form und ist mittels einer Schnappkontur 15 am Gehäuseteil 3 und hierbei gegen Verdrehung gesichert. Gleichzeitig ist auf der in Figur 1 rechten, dem Kettenblattträger 11 zugewandten Seite der Auswerteeinheit 14 eine radial nach außen gerichtete Montagehilfskontur 16 vorhanden, welche eine Sicherung gegen Falschmontage der Auswerteeinheit 14 darstellt.

Zusätzlich zur Drehmomentmessung ermöglicht das Tretlager 1 auch eine Drehzahlmessung sowie eine Drehrichtungserkennung. Zu diesem Zweck ist auf der Antriebswelle 2 im Bereich axial zwischen dem Wälzlager 5, das heißt demjenigen Wälzlager, welches auf der dem Kettenblattträger 11 abgewandten Seite des Rahmenteils 7 angeordnet ist, und der die Antriebswelle 2 mit der Messhülse 8 koppelnden Verzahnung 9 ein Inkrementalgeber 17 in Form einer eine Maßverkörperung tragenden Scheibe befestigt. Je nach physikalischem Prinzip der Drehzahl- und Drehrichtungsmessung kann die Maßverkörperung beispielsweise durch geometrische, optische und/oder magnetische Eigenschaften verwirklicht sein. In jedem Fall ist ein mit dem Inkrementalgeber zusammenwirkender, in der Figur 1 nicht gesondert erkennbarer Sensor in die Auswerteeinheit 14 integriert.

Jedes der Wälzlager 5, 6 ist hier als Kugellager mit metallischen oder keramischen Kugeln 18, 19 als Wälzkörper ausgebildet. Die Wälzlager 5, 6 unterscheiden sich hinsichtlich ihrer Dimensionierung, wobei die Kugeln 18 des Wälzlagers 5 größer sind als die Kugeln 19 des Wälzlagers 6, welches dem Kettenblattträger 11 benachbart ist. Letztgenanntes Wälzlager 6 überträgt eine in radialer Richtung auf die Antriebswelle 2 wirkende Belastung auf das Rahmenteil 7, wobei auch die Abtriebshülse 10 und die Gleitlagerung 13 im Kraftfluss liegen.

Das Tretlager 1 gemäß Figur 2 unterscheidet sich hinsichtlich seiner Funktion nicht von den Tretlager 1 nach Figur 1. Messhülse 8 und Abtriebshülse 10 sind einstückig ausgeführt. Ein Kettenblattträger ist in Figur 2 zwar nicht dargestellt, ist jedoch, ebenso wie in Figur 1, auf der in der Darstellung rechten Seite des Tretlagers 1 angeordnet. Eine für die Montage des Kettenblattträgers geeignete Kettenblattschnittstelle ist mit dem Bezugszeichen 20 bezeichnet. Ein Gewinde 21 auf der Abtriebswelle 10 dient der Montage der in Figur 2 ebenfalls nicht dargestellten Kontermutter 12. Zusätzlich zum Inkrementalgeber 17 ist der mit diesem zusammenwirkende, in der Auswerteeinheit 14 angeordnete Sensor 22 erkennbar. Der Sensor 22 ist an eine Anschlussleitung 23 angeschlossen.

Es hat sich nun gezeigt, dass ein derartiges Tretlager gemäß dem Stand der Technik im Betrieb Ausfallerscheinungen im Bereich des kleiner dimensionierten Wälzlagers aufweist, welches dem Kettenblattträger zugeordnet ist. Das Wälzlager an dieser Stelle ist das stärker belastete der beiden Lager, jedoch ist es aufgrund seiner dimensionell kleineren Auslegung weniger tragfähig. Weiterhin hat es sich gezeigt, dass die Montagefreundlichkeit des Tretlagers und die Kraftübertragung verbesserungswürdig sind. Für den Standardfahrradrahmen (BSA-Rahmen) gibt es aktuell kein Produkt auf dem Markt, das die Erfassung beidseitig aufgebrachter Drehmomente (linke Tretkurbel und rechte Tretkurbel) ermöglicht.

Die JP 2014 004851 A der als nächstliegender Stand der Technik für den Gegenstand des Anspruchs 1 gilt, beschreibt ein Tretlager mit einer Antriebswelle, zwei

Wälzlagern und einer axial zwischen den Wälzlagern angeordneten und die Antriebswelle umschließenden Messhülse.

Der Erfindung liegt die Aufgabe zugrunde, ein Tretlager mit Kraft- und/oder Drehmomentsensorik, insbesondere zur Erfassung beidseitig aufgebrachter Drehmomente, gegenüber dem genannten Stand der Technik insbesondere hinsichtlich der Haltbarkeit und Montagefreundlichkeit weiterzuentwickeln. Weiterhin soll ein Fahrrad mit einem solchen Tretlager angegeben werden.

Diese Aufgabe wird erfindungsgemäß gelöst durch ein Tretlager mit den Merkmalen des Anspruchs 1. Darin handelt es sich um ein Tretlager mit
- einer Antriebswelle, welche zur Verbindung mit zwei Pedalen vorgesehen ist,
- zwei die Antriebswelle lagernden Wälzlagern, wobei die Wälzlager jeweils in einem Gehäuseteil umfassend ein Gewinde angeordnet sind,
- einer axial zwischen den Wälzlagern angeordneten, die Antriebswelle umschließenden Messhülse,
- einer in axialer Verlängerung der Messhülse angeordneten, mit dieser drehfest verbundenen, zur Verbindung mit einem Kettenblattträger vorgesehenen Abtriebshülse, wobei die Messhülse und die Abtriebshülse einstückig ausgeführt sind,
- einem stirnseitig der Messhülse, auf deren der Abtriebshülse abgewandten Seite angeordneten Inkrementalgeber, welcher zur Drehzahl- und Drehsinnmessung der Antriebswelle vorgesehen ist, und
- einer die Messhülse koaxial umgebenden Auswerteeinheit, welche mit der Messhülse sowie mit dem Inkrementalgeber zusammenwirkt,
- wobei die beiden Wälzlager gleich dimensionierte Außenringe und Wälzkörper aufweisen, und
- mit einer drehfest relativ zur Auswerteeinheit angeordneten Platine, auf welcher mindestens ein mit dem Inkrementalgeber zusammenwirkender Sensor angeordnet ist.

Das stärker belastete der beiden Wälzlager ist gleich tragfähig ausgelegt wie das andere Wälzlager und damit weniger anfällig für Schäden.

Weiterbildungen des erfindungsgemäßen Tretlagers sind Gegenstand der abhängigen Ansprüche.

Die Antriebswelle kann dabei als Vollwelle oder Hohlwelle ausgebildet sein. Eine Verbindung der Antriebswelle mit zwei Pedalen erfolgt üblicherweise über Tretkurbeln, die als Kopplungssitz einen Vierkant nach ISO6695:2015, oder alternativ einen Mini-ISIS aufweisen, und die auf die Antriebswelle montiert werden.

Beide Wälzlager sitzen fest in den Gehäuseteilen, welche vorzugsweise aus Aluminium oder Kunststoff PA66 gebildet sind. Vorzugsweise werden die Gehäuseteile über standardisierte "BSA-Gewinde" in den Fahrradrahmen eingeschraubt.

Dabei ist ein Außendurchmesser der Außenringe der Wälzlager vorzugsweise größer als ein Außendurchmesser der Gewinde der Gehäuseteile. Dies ermöglicht größer dimensionierte und damit den Einsatz tragfähigerer Wälzlager für das Tretlager.

Das in Fahrtrichtung linke Wälzlager ist vorzugsweise ein Loslager und wird durch einen Schiebesitz am Innenring auf der Antriebswelle montiert. Das in Fahrtrichtung rechte Wälzlager ist ein bevorzugt ein Festlager und wird insbesondere durch einen Sicherungsring auf der kombinierten Mess-/ Abtriebshülse gesichert.

Über Tretkurbeln werden Drehmomente von rechts und links in die Antriebswelle des Tretlagers eingeleitet. Dabei wird hier nicht unterschieden, von welcher Tretkurbel das Drehmoment eingebracht wird. Beide Drehmomente werden über die als Hohlwelle ausgebildete Messhülse insbesondere durch eine Verzahnung, bevorzugt mit integrierter Sicherung der Position der Messhülse, zur Übertragung axialer Kräfte übertragen. Der Kraft- bzw. Drehmomentfluss erfolgt über den Kettenblattträger, der mittels einer Kopplungsgeometrie mit der Messhülse drehfest verbunden ist und durch eine Kontermutter gesichert ist, auf ein Kettenblatt und wird folglich auf die Fahrradkette weitergeleitet.

Die Drehwinkeländerung der Antriebswelle wird vorzugsweise magnetisch mittels mindestens eines Magnetfeldsensors, vorzugsweise Hall-Sensors, und einem Inkrementalgeber, wie beispielweise einem magnetisierten Polring oder Encoder, gemessen. Alternativ wird die Drehwinkeländerung mit einem Sensor und einem Inkrementalgeber auf der Antriebswelle gemessen. Die Drehzahl der Antriebswelle und die Drehrichtung werden aus dem Sensorsignal der Drehwinkeländerung errechnet. Die Sensoren für die Drehwinkeländerung sind in der Auswerteeinheit, vorzugsweise auf einer Platine, befestigt. Das Drehmoment wird auf dem magnetisierten Abschnitt der Messhülse zwischen dem Kopplungssitz zur Antriebswelle und dem in Fahrtrichtung rechten Kugellager mittels eines berührungslosen magnetostriktiven Verfahrens gemessen. Die dafür nötige Sensorik ist in der Auswerteeinheit, vorzugsweise auf der Platine, befestigt.

So hat es sich bewährt, wenn das dem Inkrementalgeber benachbarte Wälzlager einen Innenring aufweist, der über einen Adapter mit der Antriebswelle verbunden ist. So können beide Wälzlager des Tretlagers identisch dimensioniert werden, um die Teilevielfalt und damit die Lagerhaltungskosten zu minimieren.

Das dem Inkrementalgeber benachbarte Wälzlager weist bevorzugt einen Innenring auf, der einstückig mit dem Adapter ausgebildet ist. So kann die Anzahl an Bauteilen weiter reduziert werden.

Zwischen der Abtriebshülse und der Antriebswelle ist in einer bevorzugten Ausführungsform des Tretlagers eine Gleitlagerung angeordnet. Die Gleitlagerung ist vorzugsweise radial innerhalb des dem Kettenblattträger benachbarten Wälzlagers angeordnet, wobei sich die axiale Erstreckung - bezogen auf die Rotationsachse der Antriebswelle - der Gleitlagerung mit der axialen Positionierung dieses Wälzlagers zumindest überschneidet. Dabei kann eine solche Gleitlagerung bereits durch eine geeignete Einstellung der Passung von Messhülse zu Antriebswelle realisiert sein, ohne dass hier weitere Bauelemente, wie Beschichtungen oder dergleichen, erforderlich wären. Alternativ kann hier aber auch ein Wälzlager anstatt eines Gleitlagers angeordnet sein.

Zusätzlich zu einem Gleit- oder Wälzlager kann zwischen der Abtriebshülse und der Antriebswelle eine O-Ring-Dichtung angeordnet sein, die eine zuverlässige Abdichtung zwischen Messhülse und Antriebswelle bereitstellt. Diese O-Ring-Dichtung kann die eingangs beschriebene geringe, drehmomentabhängige Verdrehung, die zwischen einerseits der Antriebswelle und andererseits der Messhülse samt Abtriebshülse auftritt, aufnehmen.

Weiterhin hat es sich als vorteilhaft erwiesen, wenn ein Sprengring zwischen der Messhülse und der Antriebswelle, insbesondere im Bereich einer Verzahnung zwischen diesen, angeordnet ist. Der Sprengring sichert die Lage der Messhülse auf der Antriebswelle.

Eine dem Inkrementalgeber abgewandte Seite der Auswerteeinheit ist vorzugsweise per Schnappkontur drehfest relativ zu einem Außenring des dem Inkrementalgeber abgewandten Wälzlagers gehalten.

Die Auswerteeinheit weist weiterhin vorzugsweise eine radial nach außen ragende Montagehilfskontur zur Sicherung gegen Falschmontage der Auswerteeinheit auf.

Die Aufgabe wird weiterhin für ein Fahrrad, insbesondere ein Fahrrad mit elektrischem Hilfsantrieb, aufweisend ein Rahmenteil mit einer horizontalen Öffnung zur Aufnahme eines Tretlagers sowie ein in die Öffnung des Rahmenteils eingebautes erfindungsgemäßes Tretlager gelöst, wobei die Antriebswelle des Tretlagers mit zwei Pedalen verbunden ist und wobei die Außenringe der Wälzlager derart dimensioniert sind, dass ein Außendurchmesser der Außenringe größer ist als ein Durchmesser der Öffnung, so dass die beiden Wälzlager außerhalb des Rahmenteils angeordnet sind.

Diese Auslegung der Wälzlager ermöglicht den Einsatz größer dimensionierter und damit insgesamt tragfähigerer Wälzlager als bei der bekannten Lösung gemäß dem Stand der Technik. Dies verbessert die Haltbarkeit des Tretlagers und damit die Belastbarkeit und Haltbarkeit des Fahrrades insgesamt.

Die Kombination aus einem Tretlager mit Sensorik mit solchen "außenliegenden" Wälzlagern löst eine vorhandene Bauraumproblematik und ermöglicht es, alle Sensorkomponenten in den Fahrradrahmen zu integrieren. Die Montierbarkeit des Tretlagers samt Sensorik ist dadurch verbessert und eine Anschlussleitung für Spannungsversorgung und Datenübertragung kann beschädigungsfrei in den Fahrradrahmen verlegt und angeschlossen werden.

Dabei hat es sich bewährt, wenn die Öffnung ein erstes Ende und ein zweites Ende aufweist, wobei eines der Gehäuseteile zur Aufnahme der Wälzlager im Bereich des ersten Endes und das weitere Gehäuseteil im Bereich des zweiten Endes mit dem Rahmenteil verschraubt sind. Dies ermöglicht eine feste und dauerhafte Fixierung des besonders tragfähigen Tretlagers am Rahmen des Fahrrades.

Nachfolgend werden Ausführungsbeispiele der Erfindung anhand der Figuren 3 bis 6 erläutert. Hierin zeigen:
- Fig. 3: ein Schnittbild eines Tretlagers, eingebaut in ein Rahmenteil eines Fahrrades;
- Fig. 4: das Tretlager gemäß Figur 3 in dreidimensionaler Ansicht;
- Fig. 5: ein weiteres Tretlager im Schnittbild; und
- Fig. 6: ein Schnittbild eines weiteren Tretlagers, eingebaut in ein Rahmenteil eines Fahrrades.

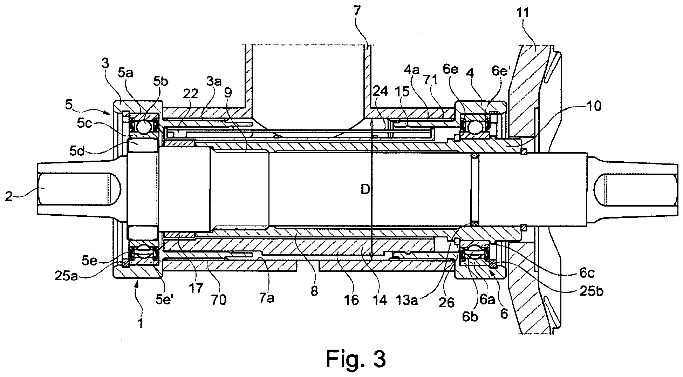

Die in den Figuren 3 bis 6 dargestellten Tretlager 1, 1', 1" sind zum Einbau in ein Fahrrad, insbesondere mit elektrischem Antrieb, vorgesehen. Hinsichtlich der prinzipiellen Funktion des Tretlagers 1, 1', 1" wird auf den eingangs zitierten Stand der Technik verwiesen. Einander entsprechende oder gleichwirkende Teile sind in allen Figuren mit den gleichen Bezugszeichen gekennzeichnet.

Das in Figur 3 dargestellte Tretlager 1 weist eine Antriebswelle 2 auf, an welcher zwei nicht dargestellte Pedale über Tretkurbeln befestigbar sind. Die Antriebswelle 2 ist in zwei Gehäuseteilen 3, 4 mittels zweier Wälzlager 5, 6 gelagert. Die beiden Gehäuseteile 3, 4 sind in einer Öffnung 7a in einem Rahmenteil 7 eines Fahrrads nicht drehbar gelagert. Dazu weisen die Gehäuseteile 3, 4 jeweils ein Gewinde 3a, 4a auf, welche im Bereich des ersten Endes 70 und des zweiten Endes 71 der Öffnung 7a mit dem Rahmenteil 7 verschraubt sind. Beide Wälzlager 5, 6 sitzen fest in den Gehäuseteilen 3, 4, welche vorzugsweise aus Aluminium oder Kunststoff PA66 gebildet sind. Vorzugsweise werden die Gehäuseteile 3, 4 über Gewinde 3a, 4a, die als standardisierte "BSA-Gewinde" ausgeführt sind, in das Rahmenteil 7 eingeschraubt.

Das durch den Fahrer des Fahrrads über die beiden Pedale in die Antriebswelle 2 eingeleitete Drehmoment wird an eine magnetisierte Messhülse 8 weitergeleitet, die die Antriebswelle 2 konzentrisch umgibt und einseitig, das heißt lediglich im Bereich einer ihrer Stirnseiten, drehfest mittels einer Verzahnung 9 mit der Antriebswelle 2 verbunden ist. Auf der zweiten, nicht mit der Antriebswelle 2 verbundenen Stirnseite der Messhülse 8 ist mit dieser eine Abtriebshülse 10 einstückig verbunden.

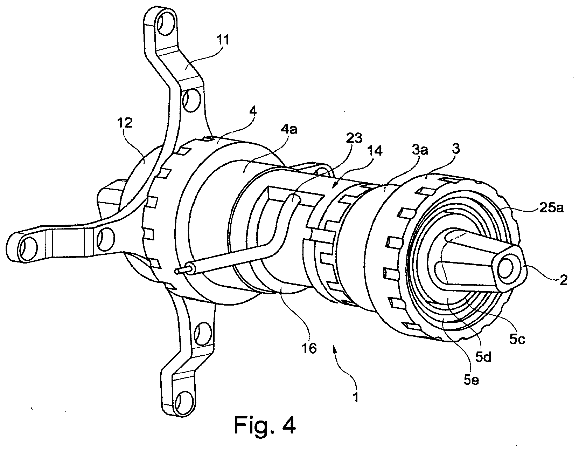

Die Abtriebshülse 10, welche eine gerade Verlängerung der Messhülse 8 darstellt, ist drehfest verbunden mit einem Kettenblattträger 11, auf welchen in an sich bekannter Weise mindestens ein Kettenblatt des Fahrrads geschraubt wird. Auf der äußeren, den Wälzlagern 5, 6 abgewandten Seite des Kettenblattträgers 11 befindet sich eine hier nicht dargestellte Kontermutter 12, welche den festen Sitz des Kettenblattträgers 11 sichert (vergleiche Figuren 4 bis 6).

Das in Fahrtrichtung linke Wälzlager 5 ist vorzugsweise ein Loslager und wird durch einen Schiebesitz am Innenring 5c auf der Antriebswelle 2 montiert. Das in Fahrtrichtung rechte Wälzlager 6 ist bevorzugt ein Festlager und wird insbesondere durch einen Sicherungsring 26 auf der kombinierten Mess-/ Abtriebshülse 8, 10 gesichert.

Im Bereich der Abtriebshülse 10 ist diese Anordnung aus Messhülse 8 und Abtriebshülse 10 mittels einer nicht im Detail dargestellten Gleitlagerung gelagert. Zudem ist eine O-Ring-Dichtung 13a zur Abdichtung zwischen Antriebswelle 2 und Messhülse 8 vorgesehen. Die O-Ring-Dichtung 13a kann geringe, drehmomentabhängige Verdrehungen zwischen einerseits der Antriebswelle 2 und andererseits der Messhülse 8 und der Abtriebshülse 10 aufzunehmen, da die Messhülse 8 selbst bei einem hohen über die Antriebswelle 2 aufgebrachten Drehmoment lediglich eine geringe Torsion von nicht mehr als höchstens einigen Grad aufweist.

Die Drehmomentbelastung innerhalb der Antriebswelle 2 sowie der Messhülse 8, welche kaum zu einer Torsion der Messhülse 8 führt, ist über geänderte magnetische Eigenschaften der Messhülse 8 detektierbar. Dieser zur Drehmomentmessung genutzte, sogenannte magnetoelastische Effekt hat den Vorteil, dass sämtliche rotierenden, Drehmoment übertragenden Teile keine elektrischen Kontaktierungen zur Übertragung von Signalen oder elektrischer Leistung benötigen. Die Auswertesensensorik, mit welcher das in der Messhülse 8 wirkende Drehmoment detektiert wird, ist vielmehr in einer starr innerhalb des Rahmenteils 7 angeordneten Auswerteeinheit 14, auch als Bobin bezeichnet, angeordnet.

Die Auswerteeinheit 14 hat eine zur Antriebswelle 2 konzentrische hohlzylindrische Form und ist mittels einer Schnappkontur 15 am Gehäuseteil 4 und hierbei gegen Verdrehung gesichert. Gleichzeitig ist auf der in Figur 3 rechten, dem Kettenblattträger 11 zugewandten Seite der Auswerteeinheit 14 eine radial nach außen gerichtete Montagehilfskontur 16 vorhanden, welche eine Sicherung gegen Falschmontage der Auswerteeinheit 14 darstellt.

Zusätzlich zur Drehmomentmessung ermöglicht das Tretlager 1 auch eine Drehzahlmessung sowie eine Drehrichtungserkennung. Zu diesem Zweck ist auf der Antriebswelle 2 im Bereich axial zwischen dem Wälzlager 5, das heißt demjenigen Wälzlager, welches auf der dem Kettenblattträger 11 abgewandten Seite des Rahmenteils 7 angeordnet ist, und der die Antriebswelle 2 mit der Messhülse 8 koppelnden Verzahnung 9 ein Inkrementalgeber 17 in Form einer eine Maßverkörperung tragenden Scheibe befestigt. Je nach physikalischem Prinzip der Drehzahl- und Drehrichtungsmessung kann die Maßverkörperung beispielsweise durch geometrische, optische und/oder magnetische Eigenschaften verwirklicht sein. In jedem Fall ist ein mit dem Inkrementalgeber 17 zusammenwirkender Sensor 22 in die Auswerteeinheit 14 integriert. Der Sensor befindet sich auf einer Platine 24, die in die Auswerteeinheit 14 integriert ist. Die Platine 24, welche eine Komponente der Auswerteeinheit 14 darstellt, ist mit dem übrigen, im Wesentlichen zylindrischen Teil der Auswerteeinheit 14 fest verbunden oder verbindbar. In jedem Fall handelt es sich bei der Platine 24 um ein nicht rotierendes Teil. Bei der Montage der verschiedenen messtechnischen Komponenten des Tretlagers 1 ist die Möglichkeit gegeben, zunächst den Inkrementalgeber 17 mit zugehörigem, auf der Platine 24 angeordneten Sensor 22 auf der Antriebswelle 2 beziehungsweise fest relativ zum Gehäuseteil 3 und damit auch zum Außenring 5a des Wälzlagers 5 zu montieren, bevor die weiteren Komponenten der Auswerteeinheit 14 montiert werden.

Jedes der Wälzlager 5, 6 ist als Kugellager mit metallischen oder keramischen Wälzkörpern 5b, 6b ausgebildet. Die Wälzlager 5, 6 unterscheiden sich nicht hinsichtlich ihrer Dimensionierung, wobei die Außenringe 5a, 6a und die Wälzkörper 5b, 6b identisch dimensioniert sind. Dabei weisen die Außenringe 5a, 6a einen größeren Außendurchmesser auf als die Gewinde 3a, 4a der Gehäuseteile 3, 4. In dieser Ausführungsform sind die Innenringe 5c, 6c der Wälzlager 5, 6 ebenfalls identisch dimensioniert ausgeführt. Der Innenring 5c des Wälzlager 5 ist daher über einen Adapter 5d mit der Antriebswelle 2 verbunden. Weiterhin sind Dichtungen 5e, 5e', 6e, 6e' zur Abdichtung der Wälzlager 5, 6 vorgesehen. Die Wälzlager 5, 6 sind weiterhin mittels Gehäuseringen 25a, 25b in den Gehäuseteilen 3, 4 fixiert. Die Außenringe 5a, 6a der Wälzlager 5, 6 besitzen weiterhin einen Außendurchmesser, der größer ist als der Durchmesser D der Öffnung 7a. Die Wälzlager 5, 6 weisen demnach eine höhere Tragfähigkeit auf als bekannte Wälzlager gemäß den Figuren 1 und 2, die in die Öffnung 7a passen. Somit sind die Wälzlager 5, 6 außerhalb des Rahmenteils 7 angeordnet. Das Wälzlager 6 überträgt eine in radialer Richtung auf die Antriebswelle 2 wirkende Belastung auf das Rahmenteil 7, wobei auch die Abtriebshülse 10 im Kraftfluss liegt.

Figur 4 zeigt das Tretlager gemäß Figur 3 im nicht eingebauten Zustand in dreidimensionaler Ansicht. Gleiche Bezugszeichen wie in Figur 3 kennzeichnen gleiche Elemente. In Figur 4 ist weiterhin eine an der Auswerteeinheit 14 angeordnete elektrische Anschlussleitung 23 und die Kontermutter 12 erkennbar.

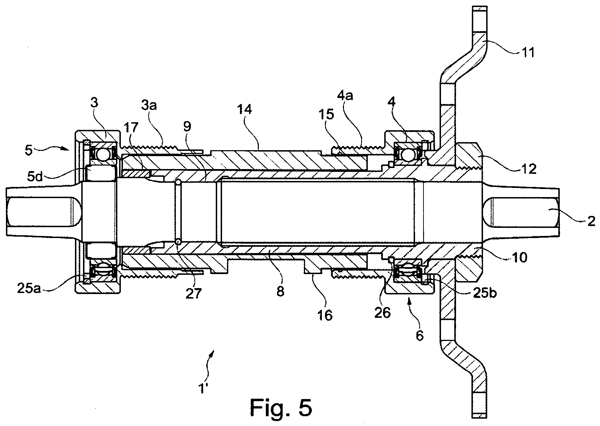

Im Schnittbild eines weiteren Tretlagers 1' gemäß Figur 5 befindet sich ein Sprengring 27 im Bereich der Verzahnung 9 zwischen Messhülse 8 und Antriebswelle 2. Im Bereich der Abtriebshülse 10 befindet sich hier eine Gleitlagerung zwischen der Antriebswelle 2 und der Abtriebshülse 10, die hier nicht näher bezeichnet ist. Die Auswerteeinheit 14 hat eine zur Antriebswelle 2 konzentrische hohlzylindrische Form und ist mittels einer Schnappkontur 15 am Gehäuseteil 4 und hierbei gegen Verdrehung gesichert. Im Übrigen kennzeichnen gleiche Bezugszeichen wie in den Figuren 3 und 4 gleiche Elemente.

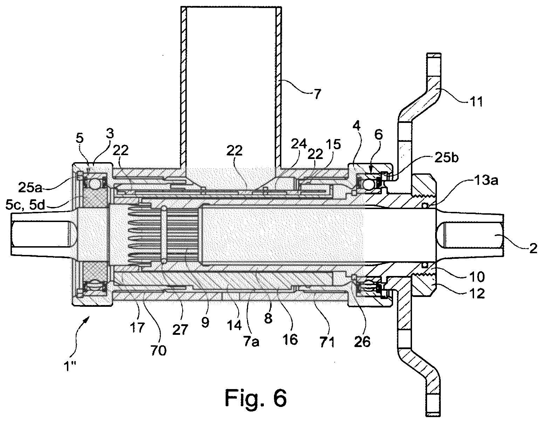

Figur 6 zeigt ein weiteres Tretlager 1", eingebaut in ein Rahmenteil 7 eines Fahrrades. Gleiche Bezugszeichen wie in den Figuren 3 bis 5 kennzeichnen gleiche Elemente. Der Innenring 5c des Wälzlagers 5 ist hier einstückig mit dem Adapter 5d ausgeführt. Die Platine 24 weist hier drei Sensoren 22 auf. Es ist eine O-Ring-Dichtung 13a vorgesehen, wobei die O-Ring-Dichtung 13a im Bereich der Kontermutter 12 angeordnet ist. Weiterhin ist ein Sprengring 27 im Bereich der Verzahnung 9 zwischen Messhülse 8 und Antriebswelle 2 angeordnet ist. Diese Ausführungsform des Tretlagers 1" ist besonders gut vor Korrosion geschützt, da die O-Ring-Dichtung 13a ein Eindringen von Wasser und/oder Schmutz zwischen Antriebswelle 2 und Abtriebshülse 10 und eine Beeinflussung des Inkrementalgebers 17 durch diese eindringenden Stoffe zuverlässig verhindert.

Das erfindungsgemäße Tretlager 1, 1', 1" gemäß den Figuren 3 bis 6 ist in jeder der erläuterten Ausführungsformen für Fahrräder, insbesondere mit motorischer Unterstützung, aber beispielsweise auch für Ergometer, geeignet.

### Bezugszeichenliste

- 1, 1', 1": Tretlager
- 2: Antriebswelle
- 3,4: Gehäuseteil
- 3a, 4a: Gewinde
- 5, 6: Wälzlager
- 5a, 6a: Außenring
- 5b, 6b: Wälzkörper
- 5c, 6c: Innenring
- 5d: Adapter
- 5e, 5e': Dichtung
- 6e, 6e': Dichtung
- 7: Rahmenteil
- 7a: Öffnung
- 8: Messhülse
- 9: Verzahnung
- 10: Abtriebshülse
- 11: Kettenblattträger
- 12: Kontermutter
- 13: Gleitlagerung
- 13a: O-Ring-Dichtung
- 14: Auswerteeinheit
- 15: Schnappkontur
- 16: Montagehilfskontur
- 17: Inkrementalgeber
- 18, 19: Kugel
- 20: Kettenblattschnittstelle
- 21: Gewinde
- 22: Sensor
- 23: Anschlussleitung
- 24: Platine
- 25a, 25b: Gehäusering
- 26: Sicherungsring
- 27: Sprengring
- 70: erstes Ende der Öffnung 7a
- 71: zweites Ende der Öffnung 7a
- D: Durchmesser der Öffnung 7a

## Patentansprüche

1. Tretlager (1, 1', 1") mit
- einer Antriebswelle (2), welche zur Verbindung mit zwei Pedalen vorgesehen ist,
- zwei die Antriebswelle lagernden Wälzlagern (5, 6), wobei die Wälzlager jeweils in einem Gehäuseteil (3, 4) umfassend ein Gewinde (3a, 4a) angeordnet sind,
- einer axial zwischen den Wälzlagern (5, 6) angeordneten, die Antriebswelle (2) umschließenden Messhülse (8),
- einer in axialer Verlängerung der Messhülse (8) angeordneten, mit dieser drehfest verbundenen, zur Verbindung mit einem Kettenblattträger (11) vorgesehenen Abtriebshülse (10), wobei die Messhülse (8) und die Abtriebshülse (10) einstückig ausgeführt sind,
- einem stirnseitig der Messhülse (8), auf deren der Abtriebshülse (10) abgewandten Seite angeordneten Inkrementalgeber (17), welcher zur Drehzahl- und Drehsinnmessung der Antriebswelle (2) vorgesehen ist,
- einer die Messhülse (8) koaxial umgebenden Auswerteeinheit (14), welche mit der Messhülse (8) sowie mit dem Inkrementalgeber (17) zusammenwirkt, wobei
- die beiden Wälzlager (5, 6) gleich dimensionierte Außenringe (5a, 6a) und Wälzkörper (5b, 6b) aufweisen, und
- mit einer drehfest relativ zur Auswerteeinheit (14) angeordneten Platine (24), auf welcher mindestens ein mit dem Inkrementalgeber (17) zusammenwirkender Sensor (22) angeordnet ist.

2. Tretlager (1, 1', 1") nach Anspruch 1, **dadurch gekennzeichnet, dass** das, dem Inkrementalgeber (17) benachbarte Wälzlager (5) einen Innenring (5c) aufweist, der über einen Adapter (5d) mit der Antriebswelle (2) verbunden ist.

3. Tretlager (1, 1', 1") nach Anspruch 2, **dadurch gekennzeichnet, dass** das, dem Inkrementalgeber (17) benachbarte Wälzlager (5) einen Innenring (5c) aufweist, der einstückig mit dem Adapter (5d) ausgebildet ist.

4. Tretlager (1, 1', 1") nach einem der Ansprüche 1 bis 3, **dadurch gekennzeichnet, dass** eine Gleitlagerung (13) zwischen der Abtriebshülse (10) und der Antriebswelle (2) angeordnet ist.

5. Tretlager (1, 1', 1") nach einem der Ansprüche 1 bis 4, **dadurch gekennzeichnet, dass** ein Außendurchmesser der Außenringe (5a, 6a) der Wälzlager (5, 6) größer ist als ein Außendurchmesser der Gewinde (3a, 4a) der Gehäuseteile (3, 4).

6. Tretlager (1, 1', 1") nach einem der Ansprüche 1 bis 5, **dadurch gekennzeichnet, dass** eine O-Ring-Dichtung (13a) zwischen der Abtriebshülse (10) und der Antriebswelle (2) und/oder ein Sprengring (27) zwischen der Messhülse (8) und der Antriebswelle (2) angeordnet ist.

7. Tretlager nach einem der Ansprüche 1 bis 6, **dadurch gekennzeichnet, dass** eine dem Inkrementalgeber (17) abgewandte Seite der Auswerteeinheit (14) per Schnappkontur (15) drehfest relativ zu einem Außenring (6a) des dem Inkrementalgeber (17) abgewandten Wälzlagers (6) gehalten ist.

8. Fahrrad, insbesondere Fahrrad mit elektrischem Hilfsantrieb, aufweisend ein Rahmenteil (7) mit einer horizontalen Öffnung (7a) zur Aufnahme eines Tretlagers sowie ein in die Öffnung (7a) des Rahmenteils (7) eingebautes Tretlager (1, 1', 1") nach einem der Ansprüche 1 bis 7, wobei die Antriebswelle (2) des Tretlagers (1, 1', 1") mit zwei Pedalen verbunden ist und wobei die Außenringe (5a, 6a) der Wälzlager (5, 6) derart dimensioniert sind, dass ein Außendurchmesser der Außenringe (5a, 6a) größer ist als ein Durchmesser (D) der Öffnung (7a), so dass die beiden Wälzlager (5, 6) außerhalb des Rahmenteils (7) angeordnet sind.

9. Fahrrad nach Anspruch 8, **dadurch gekennzeichnet, dass** die Öffnung (7a) ein erstes Ende (70) und ein zweites Ende (71) aufweist, wobei eines der Gehäuseteile (3, 4) zur Aufnahme der Wälzlager (5, 6) im Bereich des ersten Endes (70) und das weitere Gehäuseteil (4, 3) im Bereich des zweiten Endes (71) mit dem Rahmenteil (7) verschraubt sind.

## Claims

1. A crank (1, 1', 1") having
- a drive shaft (2) that is provided for connection to two pedals,
- two rolling bearings (5, 6) supporting the drive shaft, wherein the rolling bearings are each arranged in a housing part (3, 4) comprising a thread (3a, 4a),
- a measuring sleeve (8) arranged axially between the rolling bearings (5, 6) and surrounding the drive shaft (2),
- an output sleeve (10) arranged in axial extension of the measuring sleeve (8), nonrotatably connected thereto and provided for connection to a chain ring carrier (11), wherein the measuring sleeve (8) and the output sleeve (10) are integrally formed,
- an incremental encoder (17) arranged on the front side of the measuring sleeve (8), on the side thereof facing away from the output sleeve (10), which incremental encoder is provided for measuring the speed and direction of rotation of the drive shaft (2),
- an evaluation unit (14) that coaxially surrounds the measuring sleeve (8) and that cooperates with the measuring sleeve (8) and with the incremental encoder (17), wherein
- the two rolling bearings (5, 6) have equally dimensioned outer rings (5a, 6a) and roll bodies (5b, 6b), and
- having a printed circuit board (24) which is arranged in a rotationally fixed manner relative to the evaluation unit (14) and on which at least one sensor (22) cooperating with the incremental encoder (17) is arranged.

2. The crank (1, 1', 1") according to claim 1, **characterised in that** the rolling bearing (5) adjacent to the incremental encoder (17) has an inner ring (5c) that is connected to the drive shaft (2) via an adapter (5d).

3. The crank (1, 1', 1") according to claim 2, **characterised in that** the rolling bearing (5) adjacent to the incremental encoder (17) has an inner ring (5c) that is integrally formed with the adapter (5d).

4. The crank (1, 1', 1") according to one of claims 1 to 3, **characterised in that** a plain bearing (13) is arranged between the output sleeve (10) and the drive shaft (2).

5. The crank (1, 1', 1") according to one of claims 1 to 4, **characterised in that** an outer diameter of the outer rings (5a, 6a) of the rolling bearings (5, 6) is greater than an outer diameter of the threads (3a, 4a) of the housing parts (3, 4).

6. The crank (1, 1', 1") according to one of claims 1 to 5, **characterised in that** an O-ring seal (13a) is arranged between the output sleeve (10) and the drive shaft (2) and/or a snap ring (27) is arranged between the measuring sleeve (8) and the drive shaft (2).

7. The crank according to one of claims 1 to 6, **characterised in that** a side of the evaluation unit (14) facing away from the incremental encoder (17) is held in a rotationally fixed manner relative to an outer ring (6a) of the rolling bearing (6) facing away from the incremental encoder (17) by means of a snap contour (15).

8. A bicycle, in particular a bicycle with an electric auxiliary drive, having a frame part (7) with a horizontal opening (7a) for receiving a crank as well as a crank (1, 1', 1") according to one of claims 1 to 7 installed in the opening (7a) of the frame part (7), wherein the drive shaft (2) of the crank (1, 1', 1") is connected to two pedals and wherein the outer rings (5a, 6a) of the rolling bearings (5, 6) are dimensioned such that an outer diameter of the outer rings (5a, 6a) is greater than a diameter (D) of the opening (7a) such that the two rolling bearings (5, 6) are arranged outside of the frame part (7).

9. The bicycle according to claim 8, **characterised in that** the opening (7a) has a first end (70) and a second end (71), wherein one of the housing parts (3, 4) for receiving the rolling bearings (5, 6) in the region of the first end (70) and the further housing part (4, 3) in the region of the second end (71) are screwed to the frame part (7).

## Revendications

1. Pédalier (1, 1', 1") comprenant
- un arbre d'entraînement (2) qui est prévu pour une liaison avec deux pédales,
- deux paliers à roulement (5, 6) portant l'arbre d'entraînement, les paliers à roulement étant respectivement disposés dans une partie de boîtier (3, 4) comprenant un filetage (3a, 4a),
- un manchon de mesure (8) disposé axialement entre les paliers à roulement (5, 6) et entourant l'arbre d'entraînement (2),
- un manchon de sortie (10) disposé dans le prolongement axial du manchon de mesure (8), relié solidaire en rotation à celui-ci et prévu pour la liaison avec un support de plateau (11), le manchon de mesure (8) et le manchon de sortie (10) étant réalisés d'une seule pièce,
- un codeur incrémental (17) disposé à l'extrémité avant du manchon de mesure (8) sur son côté opposé au manchon de sortie (10) qui est prévu pour la mesure de la vitesse et du sens de rotation de l'arbre d'entraînement (2),
- une unité d'évaluation (14) entourant coaxialement le manchon de mesure (8) qui coopère avec le manchon de mesure (8) ainsi qu'avec le codeur incrémental (17), dans lequel
- les deux paliers à roulement (5, 6) présentent des bagues externes (5a, 6a) et des corps de roulement (5b, 6b) de dimensions identiques et
- comprenant une platine (24) disposée solidaire en rotation par rapport à l'unité d'évaluation (14), sur laquelle est disposé au moins un capteur (22) coopérant avec le codeur incrémental (17).

2. Pédalier (1, 1', 1") selon la revendication 1, **caractérisé en ce que** le palier à roulement (5) adjacent au codeur incrémental (17) présente une bague interne (5c) qui est reliée à l'arbre d'entraînement (2) par l'intermédiaire d'un adaptateur (5d).

3. Pédalier (1, 1', 1") selon la revendication 2, **caractérisé en ce que** le palier à roulement (5) adjacent au codeur incrémental (17) présente une bague interne (5c) qui est conçue d'une seule pièce avec l'adaptateur (5d).

4. Pédalier(l, 1', 1") selon l'une quelconque des revendications 1 à 3, **caractérisé en ce qu'**un palier lisse (13) est disposé entre le manchon de sortie (10) et l'arbre d'entraînement (2).

5. Pédalier (1, 1', 1") selon l'une quelconque des revendications 1 à 4, **caractérisé en ce qu'**un diamètre externe des bagues externes (5a, 6a) des paliers à roulement (5, 6) est supérieur à un diamètre externe du filetage (3a, 4a) de la partie de boîtier (3, 4).

6. Pédalier (1, 1', 1") selon l'une quelconque des revendications 1 à 5, **caractérisé en ce qu'**un joint torique (13a) est disposé entre le manchon de sortie (10) et l'arbre d'entraînement (2) et/ou un anneau de retenue (27) est disposé entre le manchon de mesure (8) et l'arbre d'entraînement (2).

7. Pédalier selon l'une quelconque des revendications 1 à 6, **caractérisé en ce qu'**un côté de l'unité d'évaluation (14) opposé au codeur incrémental (17) est maintenu par un contour d'encliquetage (15) solidaire en rotation par rapport à une bague externe (6a) du palier à roulement (6) opposé au codeur incrémental (17).

8. Bicyclette, en particulier bicyclette à assistance électrique, présentant une partie de cadre (7) ayant une ouverture horizontale (7a) pour loger un pédalier ainsi qu'un pédalier (1, 1', 1") intégré dans l'ouverture (7a) de la partie de cadre (7) selon l'une quelconque des revendications 1 à 7, l'arbre d'entraînement (2) du pédalier (1, 1', 1") étant relié à deux pédales et les bagues externes (5a, 6a) des paliers à roulement (5, 6) étant dimensionnées de sorte qu'un diamètre externe des bagues externes (5a, 6a) soit supérieur à un diamètre (D) de l'ouverture (7a), de sorte que les deux paliers à roulement (5, 6) soient disposés en dehors de la partie de cadre (7).

9. Bicyclette selon la revendication 8, **caractérisé en ce que** l'ouverture (7a) présente une première extrémité (70) et une seconde extrémité (71), l'une des parties de boîtier (3, 4) destinée à loger les paliers à roulement (5, 6) dans la zone de la première extrémité (70) et l'autre partie de boîtier (4, 3) dans la zone de la seconde extrémité (71) étant vissées à la partie de cadre (7).
